# EUROPEAN PATENT APPLICATION

(11) **EP 4 851 579 A1**
(43) Date of publication of application: **09.12.2026**
(21) Application number: 25180745.9
(22) Date of filing: 04.06.2025
(51) Int. Cl.: G01C 19/5712, G01C 19/5747

(54) **MEMS GYROSCOPE**

(71) Applicant: Murata Manufacturing Co., Ltd., Nagaokakyo-shi, Kyoto 617-8555 (JP)
(72) Inventor: PARTANEN, Mikko, 01710 Vantaa (FI)
(74) Representative: Boco IP Oy Ab

(57) **Abstract**

A microelectromechanical gyroscope comprising a first Coriolis mass which oscillates in linear motion in a primary oscillation mode and two second Coriolis masses which oscillate in rotational motion in the primary oscillation mode. The gyroscope also comprises a side anchor point, and each second Coriolis mass is suspended from the side anchor point by a suspension structure which extends from the side anchor point to a first end of said second Coriolis mass.

## Description

### FIELD OF THE DISCLOSURE

This disclosure relates to gyroscopes, and more particularly to MEMS gyroscopes. The present disclosure further concerns the sensitivity of such gyroscopes to vibration disturbance.

### BACKGROUND OF THE DISCLOSURE

MEMS gyroscopes use the Coriolis effect to measure angular velocity. A mass element is driven into oscillating movement by an actuating drive force. This oscillation may be called "drive oscillation" or "primary oscillation", and it may be said that the mass element moves in a "primary oscillation mode". This movement can for example be linear oscillation along a drive axis, or rotational oscillation about a drive axis.

When the gyroscope containing the mass element in drive oscillation undergoes an angular rotation rate Ω about an input axis (which is perpendicular to the drive axis), the mass element will be driven into a second oscillation mode by the Coriolis force. This oscillation may be called "sense oscillation" or "secondary oscillation", and it may be said that the mass element moves in a "secondary oscillation mode". This sense oscillation can for example be linear oscillation along a sense axis or rotational oscillation about a sense axis. The sense axis is perpendicular to both the drive axis and the input axis.

The primary and secondary oscillation modes are superimposed. In other words, when the gyroscope undergoes rotation about the input axis, the mass element will simultaneously move in both the first and second oscillation modes. On the other hand, the mass element moves only in the primary oscillation mode when there is no rotation about the input axis.

A mass element must be suspended with flexible suspenders from a fixed structure to be able to oscillate in the primary and secondary oscillation modes. However, the mass element will inevitably also respond to other movements than the one the gyroscope is intended to measure (angular rotation about the input axis). Mass elements are particularly prone to experience undesired oscillatory movement when external vibrations or violent shocks act on the gyroscope. Such events can cause disturbances in the measurement due to overloading of the transducers and/or amplifiers that are used for obtaining electrical signals from the mass element.

External vibrations (for example the vibrations which occur inside a car as it moves) may also couple into the desired oscillation modes, i.e. change the oscillation. Small structural asymmetries which arise in the mass element, the flexible suspenders, the electrical transducers and/or in differential amplifiers due to the limits set by manufacturing tolerances, make such coupling unavoidable in many devices.

It is known that a gyroscope where multiple interconnected mass elements are synchronized to continuously oscillate in opposite directions, i.e. in anti-phase, is less vulnerable to disturbances caused by external vibrations than gyroscopes with only one oscillating proof mass. With suitable measurement arrangements, the effect of some linear vibrations can be automatically cancelled by reading the measurement signal from the proof mass pair in a differential manner.

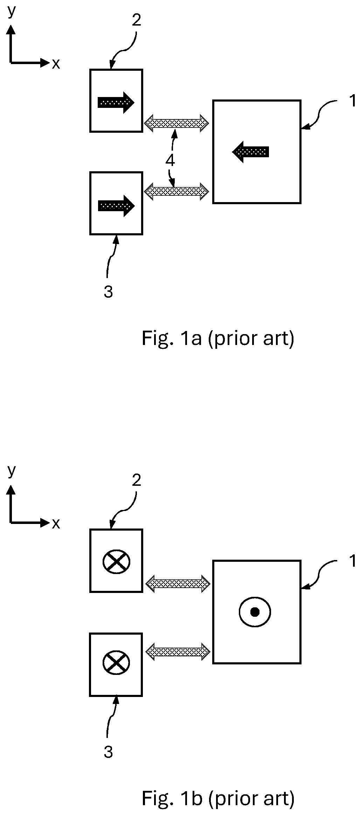

Figures 1a and 1b illustrate schematically a gyroscope known from the prior art. Figure 1a illustrates the first oscillation mode, where a first mass element 1 oscillates in anti-phase with two second mass elements 2 and 3 in the x-direction. The arrows 4 indicate a coupling structure. Figure 1b illustrates the second oscillation mode which occurs when the gyroscope undergoes rotation about an input axis which is parallel to the y-axis. The first and second mass elements oscillate in this second oscillation mode in the z-direction, which is perpendicular to both the x- and y-directions. Since the oscillation in the first oscillation mode is anti-phase (element 1 moves to the left when elements 2 and 3 move to the right, and vice versa), the oscillation in the second oscillation mode is also anti-phase (element 1 moves into the plane of the page when elements 2 and 3 move out of it, and vice versa).

The arrangement illustrated in figure 1b may be used to cancel the harmful influence of linear vibrations in the z-direction. However, it can be difficult to construct flexible suspenders which allow both oscillation modes illustrated in figures 1a and 1b without also allowing some degree of linear movement in the y-direction. In other words, gyroscopes of this kind may in some cases be disturbed by linear vibrations in the y-direction.

### BRIEF DESCRIPTION OF THE DISCLOSURE

An object of the present disclosure is to provide an apparatus which alleviates the above disadvantages.

The object of the disclosure is achieved by an arrangement which is characterized by what is stated in the independent claim. The preferred embodiments of the disclosure are disclosed in the dependent claims.

The disclosure is based on the idea of implementing rotational movement in some mass elements instead of linear movement.

### BRIEF DESCRIPTION OF THE DRAWINGS

In the following the disclosure will be described in greater detail by means of preferred embodiments with reference to the accompanying drawings, in which
Figures 1a and 1b illustrate a gyroscope known from the prior art.
Figures 2a - 2b illustrate a gyroscope with Coriolis masses moving in a primary oscillation mode.
Figure 2c illustrates a gyroscope with Coriolis masses moving in a y-axis secondary oscillation mode.
Figures 3a-3c illustrate the action of an in-phase coupling structure in a primary oscillation mode.
Figure 4a illustrates the action of an anti-phase coupling structure in a primary oscillation mode.
Figure 4b illustrates how couplers may be designed.
Figure 4c illustrates the action of an anti-phase coupling structure in a y-axis secondary oscillation mode.
Figure 5 illustrates an outer coupling structure.
Figures 6a - 6b illustrates a gyroscope with additional Coriolis masses intended for detecting angular rotation about the y-axis and the z-axis.
Figure 7 illustrates a gyroscope with additional Coriolis masses intended for detecting angular rotation about the x-axis and the z-axis.

### DETAILED DESCRIPTION OF THE DISCLOSURE

This disclosure describes a microelectromechanical gyroscope which comprises a first Coriolis mass 11 which is driven to oscillate in linear motion along an x-axis 91 in a primary oscillation mode. A y-axis is perpendicular to the x-axis, and the x- and y-axes define an xy-plane. The first Coriolis mass 11 lies in the xy-plane.

The gyroscope also comprises two second Coriolis masses 21 and 22 which also lie in the xy-plane and are coupled to the first Coriolis mass 11 with a coupling structure 30. The two second Coriolis masses 21 and 22 are driven to oscillate in rotational drive motion in the xy-plane in the primary oscillation mode.

The two second Coriolis masses (21, 22) are on opposite sides of the x-axis 91. A first end (211, 221) of each second Coriolis mass (21, 22) lies closer to the x-axis 91, and a second end (212, 222) of each second Coriolis mass (21, 22) lies further away from the x-axis 91.

The gyroscope also comprises a side anchor point 41. Each second Coriolis mass (21, 22) is suspended from the side anchor point 41 by a suspension structure (51, 52) which extends from the side anchor point 41 to the first end (211, 221) of said second Coriolis mass (21, 22).

The elements of the gyroscope, such as the Coriolis masses, the coupling structures, suspension structures and the anchor points, may be formed in a device layer. The device layer may be a layer of silicon. The device layer may define a device plane, which is illustrated and referred to as the xy-plane.

The device layer may for example be a silicon wafer, which may be called the device wafer or structure wafer. Alternatively, the device layer may be a layer which has been deposited on a substrate. In either case, the mobile microelectromechanical parts of the gyroscope may be formed in the device layer by etching. In the last stages of the manufacturing process, these parts may be fully released from the surrounding fixed parts, so that they become mobile.

The device layer may itself be structurally supported by a separate, thicker support layer or other substrate during manufacturing and/or in the finished device. The support layer may be a handle wafer.

The term "Coriolis mass" may in this disclosure refer to a mobile part of the gyroscope whose movement in the secondary oscillation mode is measured. This measurement may generate a sense signal. The amplitude of the sense signal may be proportional to the angular rotation rate. A separate sense signal may be retrieved from each Coriolis mass mentioned in this disclosure. Coriolis masses may alternatively be called mass elements or proof masses.

The first (11) and second (21, 22) Coriolis masses described in this disclosure may be configured move out of the xy-plane when the gyroscope undergoes angular rotation about the y-axis. In other words, the gyroscope may be a y-axis gyroscope, and these masses may move out of the xy-plane in the secondary oscillation mode when the gyroscope undergoes angular rotation about the y-axis.

Furthermore, the gyroscope may include additional Coriolis masses for measuring angular rotation about the x-axis. In other words, the gyroscope may be a multiaxis gyroscope which configured to measure angular rotation about the x-, y- and z-axes. From this point on, the term "y-axis secondary oscillation mode" refers to the oscillation mode which occurs when the gyroscope undergoes angular rotation about the y-axis (or any axis parallel to the y-axis). Correspondingly, the oscillation modes which occur when the gyroscope undergoes angular rotation about the z-axis and x-axis, respectively, will be labelled "z-axis secondary oscillation mode" and "x-axis secondary oscillation mode".

The gyroscope may comprise electrical drive transducers which drive the primary oscillation mode, and electrical sense transducers which measure the oscillation of the Coriolis masses in any secondary oscillation mode. These drive and sense transducers may for example be capacitive transducers or piezoelectric transducers.

The transducers may be coupled directly to the Coriolis masses. In the case of capacitive transducers, some or all of the Coriolis masses may themselves form a part of the transducer. However, drive transducers may alternatively be coupled indirectly to the Coriolis masses. In other words, there may be an intermediate structure which transmits forces between the transducers and the masses.

The gyroscope may comprise one or more fixed structures to which the first and second Coriolis masses are attached with suspension structures which allow the mass elements to move in relation to the fixed structure. Coriolis masses may also be attached to each other with coupling structures. All flexible parts described in this disclosure may alternatively be called springs.

The term "suspension structure" may in this disclosure refer to an element which extends from an anchor point to a Coriolis mass and supports the weight of the Coriolis mass. Suspension structures may comprise both flexible and stiff parts, and they may comprise parts which are flexible in some directions but rigid in other directions. Suspension structures should flexibly allow the desired primary and secondary oscillation modes, so that desired resonant frequencies can be achieved for these modes.

The term "coupling structure" may in this disclosure refer to a structure which extends between two or more Coriolis masses. Coupling structures may comprise parts which are flexible in some directions but rigid in other directions. Coupling structures should flexibly allow the desired primary and secondary oscillation modes, so that desired resonant frequencies can be achieved for these modes. Coupling structures may also resist undesired oscillation modes (i.e. undesired movements) by being considerably stiffer for the undesired modes than for the desired ones, thus bringing the resonant frequencies of the undesired modes above the frequency range of disturbing external vibrations, e.g. above 50 kHz in automotive applications.

Coupling structures may promote the synchronized oscillation of multiple Coriolis masses in the first and second oscillation modes. The term "synchronize", and phrases such as "structure A synchronizes oscillation mode X", have the following meaning. Structure A constitutes a mechanical connection in a system of interconnected mass elements which should preferably oscillate in the desired mode X, but preferably not in an undesired mode Y. Structure A exhibits a beneficial combination of rigidity and flexibility, so that the presence of structure A improves the relationship between the resonance frequency F_{X} of mode X and the resonance frequency F_{Y} of mode Y in the system.

The presence of structure A may, for example, increase the ratio F_{Y} / F_{X} and/or the difference F_{Y} - F_{X}. The reference state against which this improvement is measured may in some cases be the same system of mass elements without structure A. Structure A is in this case needed only for synchronization. In other cases, when structure A is also needed for supporting the weight of the mass elements, the reference state against which the synchronization improvement is measured may for example be the same system of mass elements where A has been replaced with an alternative structure B. In general, all suspension, synchronization and coupling arrangements are optimized for support and for flexibility in certain directions and rigidity in other directions.

Optionally, the coupling structures described in this disclosure may be attached to anchor points. They may thereby also function as suspension structures which support the weight of the Coriolis masses. However, coupling structures may alternatively not be attached to anchor points, and they perform their coupling function without simultaneously performing a suspension function.

The term "anchor point" may in this disclosure refer to a fixed structure which extends from the device layer (the xy-plane) in the z-direction to a support layer. In other words, the anchor points are locked firmly in place and are immobile in relation to the surrounding fixed parts of the gyroscope, such as the support layer.

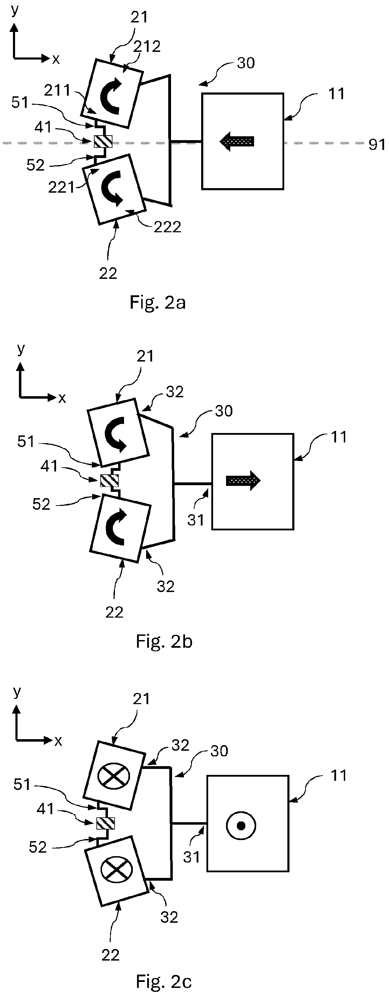

Figures 2a - 2c illustrates a gyroscope with the elements described above. Each element is illustrated schematically in these figures and may in practice have a more complex shape. Figures 2a and 2b illustrate the primary oscillation mode. Figure 2a illustrates a first phase in the primary oscillation, where Coriolis mass 11 moves leftward in the figure. Figure 2b illustrates a second phase, opposite to the first, where Coriolis mass 11 moves rightward.

The Coriolis mass 21 may be called the upper second Coriolis mass or the first second Coriolis mass, and Coriolis mass 22 may be called the lower second Coriolis mass or the second second Coriolis mass. The words "upper" and "lower" refer here only to their relative positions in the illustration, not to their location on the z-axis which is perpendicular to the illustrated xy-plane.

In figure 2a the upper second Coriolis mass 21 rotates clockwise in the xy-plane, while the lower second Coriolis mass 22 rotates counterclockwise. These rotational movements are reversed in the second phase illustrated in figure 2b.

Figure 2c illustrates the y-axis secondary oscillation mode. Here the first Coriolis mass 11 moves out of the illustrated plane. Second Coriolis masses 21 and 22 move into the illustrated plane. In the opposite phase of the secondary oscillation cycle, each out-of-plane movement illustrated in figure 2c is reversed.

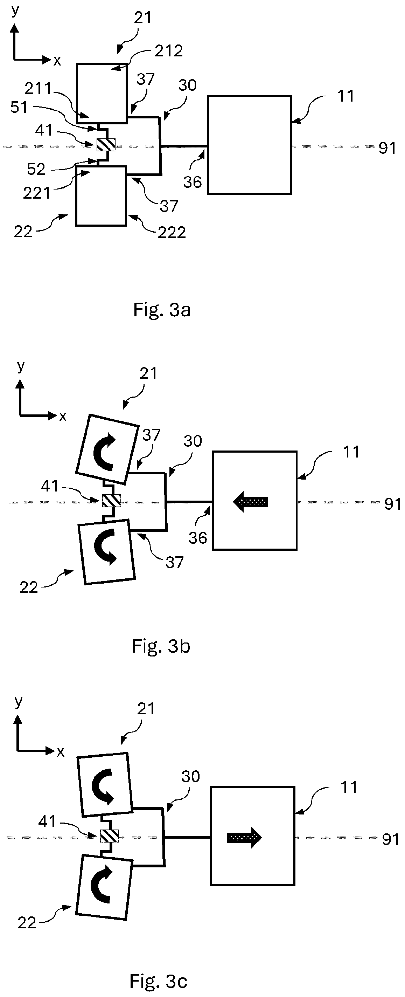

The coupling structure 30 may be an anti-phase in-plane coupling structure. In other words, the coupling structure 30 may be constructed so that, in the primary oscillation mode, the first end 36 and second end 37 (illustrated in figure 3b) of the coupling structure 30 always move in opposite in-plane directions. The opposing movement of the two ends (36, 37) may be parallel to the x-axis 91 at both the first (36) and second (37) ends.

Depending on the construction of the coupling structure 30, the movement of the second ends (37) which is parallel to the x-axis 91 may be the only movement component of these ends. Alternatively, the movement of the second ends (37) in the primary oscillation mode may comprise a movement component which is parallel to the x-axis 91, and also a movement component which is parallel to the y-axis. The second ends 37 of the coupling structure 30 may be connected to the second ends (212, 222) of the two second Coriolis masses (21, 22), as figure 2a illustrates.

The coupling structure 30 may also be an anti-phase out-of-plane coupling structure. In other words, the coupling structure 30 may be constructed so that, in the y-axis secondary oscillation mode illustrated in figure 2c, the first end 36 and second end 37 of the coupling structure 30 always move in opposite out-of-plane directions. The opposing movement of the two ends (36, 37) may then be parallel to the z-axis at both the first (36) and second (37) ends, or it may at least contain a component which is parallel to the z-axis.

The coupling structure 30 may also be called an inner coupling structure. The coupling structure 30 may be configured to synchronize the oscillation of the first Coriolis mass (11) with the oscillation of the second Coriolis masses (21, 22) in the primary oscillation mode. It may additionally be configured to synchronize the oscillation of the first Coriolis mass (11) with the oscillation of the second Coriolis masses (21, 22) in the y-axis secondary oscillation mode. Optionally, it may be configured to synchronize the oscillation of these Coriolis masses also in the z-axis secondary oscillation mode or the x-axis secondary oscillation mode.

The suspension structure may comprise a first suspension structure 51 which extends from the side anchor point 41 to the upper second Coriolis mass 21 and a second suspension structure 52 which extends from the side anchor point 41 to the lower second Coriolis mass 22, as figure 2a illustrates. Alternatively, the suspension structure may comprise a single structure which extends from the side anchor point 41 to both second Coriolis masses 21 and 22 (this option has not been illustrated).

The suspension structure (51, 52) flexibly accommodates the in-plane and out-of-plane movement of the second Coriolis masses 21 and 22 illustrated in figures 2a - 2c.

The side anchor point 41 may, but does not necessarily have to, lie between the two second Coriolis masses (21, 22). The side anchor point may, but does not necessarily have to, lie on the x-axis. The two second Coriolis masses do not have to lie on the x-axis.

The coupling structure 30 may alternatively be an in-phase coupling structure, and it may be connected to the first ends 211 and 221 of the second Coriolis masses 21 and 22. This is illustrated in figure 3a. In this case, the opposite ends 36 and 37 of the coupling structure 30 always move in the same x-direction (left or right). The oscillation of the first and second Coriolis masses in relation to each other in the primary and y-axis secondary oscillation modes still takes place in the way illustrated in figures 2a - 2c. In the y-axis secondary oscillation mode, the first Coriolis mass 11 and the second Coriolis masses always move in the opposite out-of-plane direction.

The center of gravity of each second Coriolis mass (21, 22) may move in anti-phase with the center of gravity of the first Coriolis mass 11 in the x-direction in the primary oscillation mode. In practice, this may mean that the center of gravity of Coriolis masses 21 and 22 moves to the right in figure 2a and to the left in figure 2b.

Centers of gravity moving in anti-phase in the primary oscillation mode can also be obtained with the in-phase coupling structure illustrated in figure 3a. This is illustrated in figures 3b and 3c. The movement direction of the center of gravity of the second Coriolis mass is determined by the geometry of this mass and by the locations and flexible properties of the coupling and suspension structures attached to the second Coriolis masses. In other words, each second Coriolis mass and its suspension and coupling structures can be designed so that its center of mass moves in the positive x-direction either in clockwise rotation or in counterclockwise rotation. The center of mass will then move in the negative x-direction in the opposite rotation.

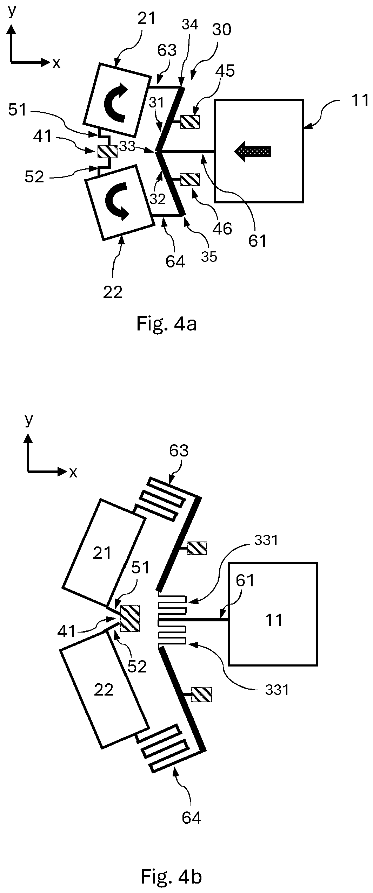

As discussed above, the coupling structure 30 may be connected to the second ends (212, 222) of the two second Coriolis masses (21, 22), or to the first ends (211, 221) of the second Coriolis masses (21, 22). In either case, the coupling structure 30 may be attached to a first suspension anchor point and to a second suspension anchor point which lie on opposite sides of the x-axis. The coupling structure 30 then functions also as a suspension structure. Figure 4a illustrates a coupling structure 30 which is suspended from a first suspension anchor point 45 and a second suspension anchor point 46. This coupling structure is attached to the second ends (212, 222) of the two second Coriolis masses (21, 22).

The coupling structure 30 may comprise a first in-plane seesaw and a second in-plane seesaw which lie on opposite sides of the x-axis. Each in-plane seesaw may be driven to rotate in the xy-plane in the primary oscillation mode. This is also illustrated in figure 4a, where the action of the coupling structure 30 corresponds to figures 2a - 2c. In figure 4a the first in-plane seesaw 31 and second in-plane seesaw 32 are attached to suspension anchor points 45 and 46 with flexures which allow these seesaws to rotate in the xy-plane.

In addition to the in-plane seesaws 31 and 32, the coupling structure 30 may comprise couplers 61, 63 and 64. A central coupler 61 may extend from the first Coriolis mass 11 to a connection point 33 where the central ends of in-plane seesaws 31 and 32 are connected to the central coupler 61. The central coupler 61 may be, but does not necessarily have to be, substantially rigid, so that it only undergoes movement in the x-direction together with the first Coriolis mass 11. However, some flexibility is still required at the connection point 33 to allow the in-plane seesaws 31 and 32 to rotate at the connection point 33. This flexibility can be achieved with many different designs, for example by implementing central meandering springs which extend in the y-direction from the central coupler 61 to the central ends of both in-plane seesaws 31 and 32. Central meandering springs 331 are illustrated in figure 4b. These meandering springs are connected to the central coupler 61 at the connection point 33.

A first distal coupler 63 and a second distal coupler 64 may extend from the distal ends of the corresponding in-plane seesaws 31 and 32 to the second ends of the corresponding second Coriolis mass 21 and 22. The first and second distal couplers 63 and 64 may be springs which transmit force in a relatively rigid manner in the x-direction, but still have sufficient in-plane flexibility to allow the illustrated in-plane rotation of the second Coriolis masses 21 and 22. They may also be rigid in the z-direction. This allows them to effectively transmit out-of-plane forces in the secondary oscillation mode.

Many different spring designs could be used in the distal couplers 63 and 64. One option is to use a distal meandering springs, illustrated in figure 4b, which extend in the y-direction and in the x-direction from the distal end of each in-plane seesaw 31 and 32 to the second end of the corresponding second Coriolis mass 21 and 22. This distal meandering spring 63 and 64 may be more flexible in the y-direction than in the x-direction.

The first and second suspension structures 51 and 52 are in figure 4b simple bending flexures which extend from the side anchor point 41 to the second Coriolis masses 21 and 22. Alternatively, the first and second suspension structures 51 and 52 could be meandering springs. Other designs are also possible. Like the distal couplers 63 and 64, the first and second suspension structures 51 and 52 should have sufficient in-plane flexibility to allow the illustrated in-plane rotation of the second Coriolis masses 21 and 22.

They may be stiff in the z-direction, so that they provide structural support for the second Coriolis masses 21 and 22.

In practice, when the first Coriolis mass 11 is driven to the left, as figure 4a illustrates, the central coupler and connection point 33 are also pushed to the left. First in-plane seesaw 31 therefore rotates clockwise about its attachment to first suspension anchor point 45, and second in-plane seesaw 32 correspondingly rotates counterclockwise. The distal couplers 63 and 64 are thereby moved right, and the second Coriolis masses 21 and 22 rotate clockwise and counterclockwise, respectively, as figure 4a illustrates. In the opposite phase of the oscillation cycle, all of these movements are reversed.

In other words, the rotational in-plane drive motion of each second Coriolis mass (21, 22) may, in the primary oscillation mode, occur substantially in phase with the in-plane rotation of the in-plane seesaw (31, 32) which is on the same side of the x-axis as said second Coriolis mass (21, 22). The rotation rate of the second Coriolis mass (21, 22) may, but does not necessarily have to be, equal to the rotation rate of the corresponding in-plane seesaw (31, 32).

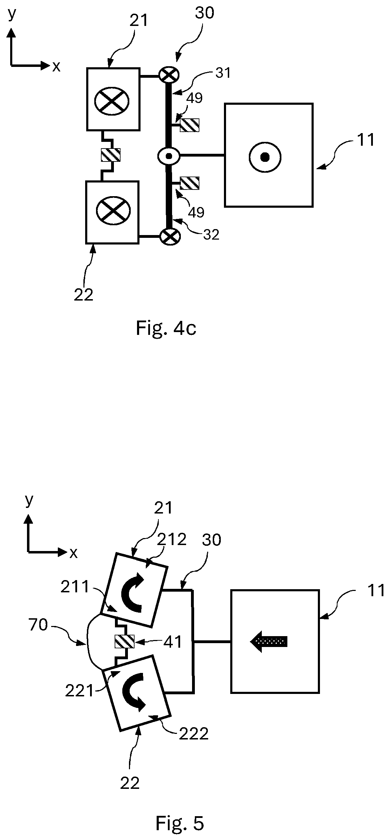

Furthermore, each in-plane seesaw 31 and 32 may be configured to rotate out of the xy-plane in the y-axis secondary oscillation mode. In other words, the ends of these seesaws may move in the z-direction in this oscillation mode. The in-plane seesaws 31 and 32 may therefore also be out-of-plane seesaws. This is illustrated in figure 4c. In other words, the flexures 49 which support the first and second in-plane seesaws 31 and 32 may be configured to flexibly allow these seesaws to undergo out-of-plane rotation about the attachment point where the flexures are joined to the seesaws. The couplers 61, 63 and 64 may be rigid in the out-of-plane direction, although some out-of-plane flexibility is still needed at the joints where these couplers are connected to the seesaws 31 and 32. This out-of-plane flexibility may for example be achieved with the meandering springs described earlier.

The movement of the different device elements in the y-axis secondary oscillation mode is illustrated in figure 4c. When the first Coriolis mass 11 is moved out of the plane of the figure, connection point 33, and the central ends of seesaws 31 and 32, which are attached to connection point 33, also move in the same direction due to the out-of-plane rigidity of the central coupler 61. But due to the rotational flexibility of flexures 49, the distal ends of the first and second seesaws 31 and 32 move in the opposite out-of-plane direction, into the plane of the figure. This movement is transferred to the second Coriolis masses 21 and 22, which also undergo out-of-plane movement in the same direction as the distal ends of the first and second seesaws 31 and 32.

The out-of-plane sense motion of each second Coriolis mass (21, 22) in the y-axis secondary oscillation mode may occur substantially in phase with the out-of-plane rotation of the in-plane seesaw (31, 32) which is on the same side of the x-axis as said second Coriolis mass.

The attachment point where the flexures 49 are attached to the corresponding in-plane seesaw 31/32 may lie substantially in the middle of the in-plane seesaw 31/32 in the y-direction. But other options are also possible. The attachment point may lie alternatively closer to the central end of each seesaw, which is closer to the x-axis 91, than to its distal end, which is further away from the x-axis 91. This will increase the amplitude of the rotational oscillation of the second Coriolis masses 21 and 22 (compared to a situation where the attachment point is in the middle). Alternatively, if this amplitude should be decreased, then the attachment point can be moved so that it is closer to the distal end of each in-plane seesaw 31/32 than to its central end.

The general benefit of all embodiments presented in this disclosure is that the movement of the second Coriolis masses in both the primary and y-axis secondary oscillation modes is not easily influenced by external disturbing vibrations occurring in the y-direction. This is due to the rotational movement of these masses.

It may, in some cases, be beneficial to synchronize the movement of the second Coriolis masses. The gyroscope may comprise an outer coupling structure 70 which extends between the first ends (211, 212) of the two second Coriolis masses (21, 22), as figure 5 illustrates. The outer coupling structure 70 may be configured to synchronize the oscillation of the second Coriolis masses (21, 22) in the primary oscillation mode, in the y-axis secondary oscillation mode, or in both of these modes.

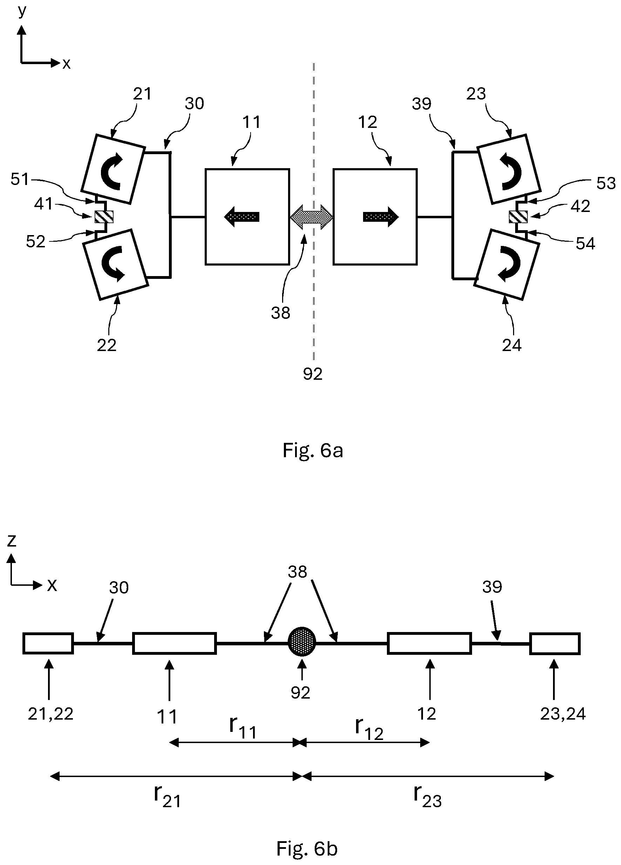

Figure 6a illustrates an additional alternative where, in addition to the elements described above, the gyroscope also comprises a third Coriolis mass 12 which is driven to oscillate in linear motion along the x-axis in the primary oscillation mode. The third Coriolis mass 12 lies in the xy-plane. The gyroscope also comprises two fourth Coriolis masses (23, 24) which also lie in the xy-plane. The fourth Coriolis masses (23, 24) are coupled to the third Coriolis mass 12 with an additional coupling structure 39. The two fourth Coriolis masses (23, 24) are driven to oscillate in rotational motion in the xy-plane in the primary oscillation mode, which is illustrated in figure 6.

The two fourth Coriolis masses (23, 24) are on opposite sides of the x-axis, and a first end of each fourth Coriolis mass (23, 24) lies closer to the x-axis, and a second end of each fourth Coriolis mass (23, 24) lies further away from the x-axis.

The gyroscope also comprises an additional side anchor point 42. Each fourth Coriolis mass (23, 24) is suspended from the side anchor point 42 by an additional suspension structure (53, 54) which extends from the additional side anchor point 42 to the first end of said fourth Coriolis mass (23, 24). The first Coriolis mass 11 is coupled to the third Coriolis mass 12 with a central coupling structure 38.

The additional coupling structure 39 may be connected to the second end of each fourth Coriolis mass (23, 24), as figure 6a illustrates. The additional coupling structure 39 may be an anti-phase coupling structure. However, all other options presented above for the coupling structure 30 apply also to the additional coupling structure 39. The additional coupling structure 39 may comprise the same parts and perform the same function as the coupling structure 30.

The first (11) and third (12) Coriolis masses may be configured to move in anti-phase along the x-axis in the primary oscillation mode, as figure 6a illustrates. In other words, the central coupling structure may be an anti-phase coupling structure. It may flexibly allow the movement of the first and third Coriolis masses in opposite directions along the x-axis but stiffly resist their simultaneous movement in the same x-direction.

The fourth Coriolis masses (23, 24) may be configured move out of the xy-plane when the gyroscope undergoes angular rotation about the y-axis. The movement of the fourth Coriolis masses (23, 24) may, in both the primary oscillation mode and all secondary oscillation modes, also correspond in all other respects to the movement of the second Coriolis masses (21, 22) in these modes. This also applies to the synchronization of the oscillation of fourth Coriolis masses (23, 24) with the oscillation of the third Coriolis mass 12. This synchronization may correspond to the synchronization of the oscillation of second Coriolis masses (21, 22) with the oscillation of the first Coriolis mass 11, which has been discussed above and illustrated for example in figures 2a - 2c.

The gyroscope may also comprise one or more central anchor points (not illustrated), and the central coupling structure 38 may extend from the one or more central anchor points to the first (11) and third (12) Coriolis masses. The central coupling structure 38 may then also form a central suspension structure.

The gyroscope may comprise a central axis 92 which is perpendicular to the x-axis and passes between the first (11) and third (12) Coriolis masses, as figure 6a illustrates. The moment of inertia of the first Coriolis mass 11 with respect to the central axis 92 may be equal to the moment of inertia of the third Coriolis mass 13 with respect to the central axis 92.

In other words, with reference to figure 6b, the following equality may apply: ${m}_{11} {r}_{11}^{2} = {m}_{12} {r}_{12}^{2}$ where m₁₁ and m₁₂ are the masses of the first (11) and third (12) Coriolis masses, respectively. r₁₁ is the distance from the central axis 92 to the center of mass of the first Coriolis mass 11 in the x-direction. r₁₂ is the distance from the central axis 92 to the center of mass of the third Coriolis mass 12 in the x-direction.

The sum of the moments of inertia of the two second Coriolis masses (21, 22) with respect to the central axis 92 may be equal to the sum of the moments of inertia of the two fourth Coriolis masses (23, 24) with respect to the central axis 92. Furthermore, the moment of inertia of the first Coriolis mass 11 with respect to the central axis 92 may be equal to the sum of the moments of inertia of the two second Coriolis masses (21, 22) with respect to the central axis 92.

For example, referring again to figure 6b, if the distance from the central axis 92 to the centers of mass of both second Coriolis masses (21, 22) in the x-direction is the same (r₂₁), and if the distance from the central axis 92 to the centers of mass of both fourth Coriolis masses (23, 24) in the x-direction is the same (r₂₃) the following equality may apply: ${m}_{11} {r}_{11}^{2} = {m}_{12} {r}_{12}^{2} = \left({m}_{21}+{m}_{22}\right) {r}_{21}^{2} = \left({m}_{23}+{m}_{24}\right) {r}_{23}^{2}$

Since the third (12) and fourth (23, 24) Coriolis masses, like the first (11) and second (21, 22) Coriolis masses, oscillate in the x-direction in the primary oscillation mode, they will move out of the xy-plane in the y-axis secondary oscillation mode when the gyroscope undergoes rotation about the y-axis. Additionally, the first Coriolis mass 11 and the third Coriolis mass 13 may also be configured to oscillate in the y-direction in a z-axis secondary oscillation mode where the gyroscope undergoes rotation about the z-axis.

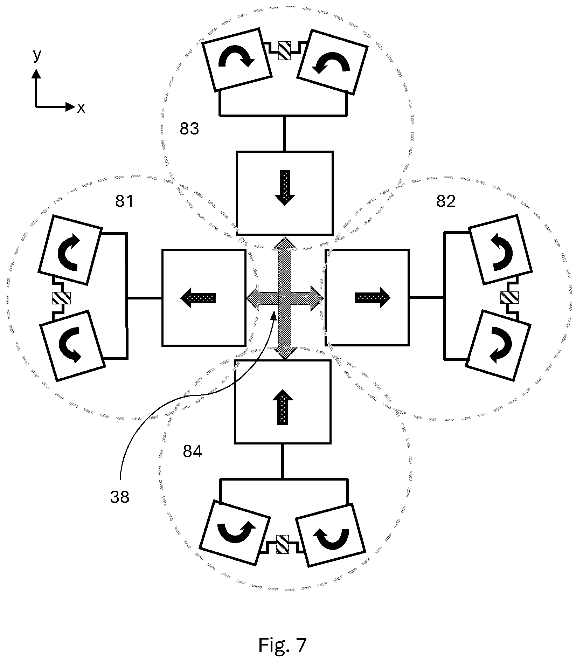

Finally, the gyroscope may be an xyz-multiaxis gyroscope, capable of measuring angular rotation about all three axes x, y, and z. This option is illustrated in figure 7. The first Coriolis mass, the second Coriolis mass and all associated coupling structures and anchors may be labelled a first measurement unit 81 on the left side of figure 7. A second measurement unit 82, comprising the third and fourth Coriolis masses, is on the rights side. The operation of these units has been described in detail above.

The gyroscope in figure 7 also comprises a third measurement unit 83 and a fourth measurement unit 84, which are identical to the first and second measurement units 81 and 82 in all respects except that the oscillation in the primary oscillation mode (illustrated in figure 7) occurs in the y-direction in the third and fourth measurement units 83 and 84. All measurement unit may be connected to the central coupling structure 38, and the central coupling structure may be configured to synchronize the mass movements illustrated in figure 7.

Since the Coriolis masses in the third (83) and fourth (84) measurement units oscillate in the y-direction in the primary oscillation mode, they will move out of the xy-plane in the x-axis secondary oscillation mode when the gyroscope undergoes rotation about the x-axis. By measuring this movement, the angular rotation rate of the gyroscope about the x-axis may also be determined.

## Claims

1. A microelectromechanical gyroscope comprising:
- a first Coriolis mass which is driven to oscillate in linear motion along an x-axis in a primary oscillation mode, wherein a y-axis is perpendicular to the x-axis, and the x- and y-axes define an xy-plane, and the first Coriolis mass lies in the xy-plane,
- two second Coriolis masses which also lie in the xy-plane and are coupled to the first Coriolis mass with a coupling structure, wherein the two second Coriolis masses are driven to oscillate in rotational drive motion in the xy-plane in the primary oscillation mode,
wherein the two second Coriolis masses are on opposite sides of the x-axis, and a first end of each second Coriolis mass lies closer to the x-axis, and a second end of each second Coriolis mass lies further away from the x-axis,
**characterized in that** the gyroscope also comprises a side anchor point and each second Coriolis mass is suspended from the side anchor point by a suspension structure which extends from the side anchor point to the first end of said second Coriolis mass.

2. A microelectromechanical gyroscope according to claim 1, wherein the coupling structure is an anti-phase coupling structure.

3. A microelectromechanical gyroscope according to claim 2, wherein the coupling structure is attached to a first suspension anchor point and to a second suspension anchor point which lie on opposite sides of the x-axis.

4. A microelectromechanical gyroscope according to any of claims 1-3, wherein the coupling structure comprises a first in-plane seesaw and a second in-plane seesaw which lie on opposite sides of the x-axis, wherein each in-plane seesaw is driven to rotate in the xy-plane in the primary oscillation mode.

5. A microelectromechanical gyroscope according to claim 4, wherein the rotational in-plane drive motion of each second Coriolis mass in the primary oscillation mode occurs substantially in phase with the in-plane rotation of the in-plane seesaw which is on the same side of the x-axis as said second Coriolis mass.

6. A microelectromechanical gyroscope according to any preceding claim, wherein the center of gravity of each second Coriolis mass moves in anti-phase with the center of gravity of the first Coriolis mass in the x-direction in the primary oscillation mode

7. A microelectromechanical gyroscope according to any preceding claim, wherein the gyroscope comprises a coupling structure which extends between the first ends of the two second Coriolis masses.

8. A microelectromechanical gyroscope according to any preceding claim, wherein the first and second Coriolis masses are configured move out of the xy-plane when the gyroscope undergoes angular rotation about the y-axis.

9. A microelectromechanical gyroscope according to any preceding claim, wherein the gyroscope also comprises:
- a third Coriolis mass which is driven to oscillate in linear motion along the x-axis in the primary oscillation mode, wherein the third Coriolis mass lies in the xy-plane,
- two fourth Coriolis masses which also lie in the xy-plane and are coupled to the third Coriolis mass with an additional coupling structure, wherein the two fourth Coriolis masses are driven to oscillate in rotational motion in the xy-plane in the primary oscillation mode,
wherein the two fourth Coriolis masses are on opposite sides of the x-axis, and a first end of each fourth Coriolis mass lies closer to the x-axis, and a second end of each fourth Coriolis mass lies further away from the x-axis,
wherein the gyroscope also comprises an additional side anchor point, and each fourth Coriolis mass is suspended from the side anchor point by an additional suspension structure which extends from the additional side anchor point to the first end of said fourth Coriolis mass, and the first Coriolis mass is coupled to the third Coriolis mass with a central coupling structure.

10. A microelectromechanical gyroscope according to claim 9, wherein the first and third Coriolis masses are configured to move in anti-phase along the x-axis in the primary oscillation mode.

11. A microelectromechanical gyroscope according to any of claims 9-10, wherein the gyroscope comprises a central axis which is perpendicular to the x-axis and passes between the first and third Coriolis masses, and the moment of inertia of the first Coriolis mass with respect to the central axis is equal to the moment of inertia of the third Coriolis mass with respect to the central axis.

12. A microelectromechanical gyroscope according to claim 11, wherein the sum of the moments of inertia of the two second Coriolis masses with respect to the central axis is equal to the sum of the moments of inertia of the two fourth Coriolis masses with respect to the central axis.

13. A microelectromechanical gyroscope according to claim 12, wherein the moment of inertia of the first Coriolis mass with respect to the central axis is equal to the sum of the moments of inertia of the two second Coriolis masses with respect to the central axis.

14. A microelectromechanical gyroscope according to any of claims 9-13, wherein the third and fourth Coriolis masses are configured move out of the xy-plane when the gyroscope undergoes angular rotation about the y-axis.
